# EUROPEAN PATENT APPLICATION

(11) **EP 4 095 408 A1**
(43) Date of publication of application: **30.11.2022**
(21) Application number: 21176668.8
(22) Date of filing: 28.05.2021
(51) Int. Cl.: F16D 55/226, F16D 65/18, F16D 65/56

(54) **A HYDRAULIC DISC BRAKE WITH A PARKING BRAKE ARRANGEMENT**

(71) Applicant: Meritor Heavy Vehicle Braking Systems (UK) Limited, Cwmbran, Gwent NP44 3XU (GB)
(72) Inventor: CLEARY, Sean, Cwmbran Gwent NP44 3 XU (GB); SZAFNAUER, Alex, Cwmbran Gwent NP44 3 XU (GB)
(74) Representative: Whitfield, Jack Stephen

(57) **Abstract**

A hydraulic disc brake (10) for a vehicle is provided. The disc brake comprises a service brake arrangement (30) comprising a service piston (38) configured to actuate under hydraulic pressure to urge a brake pad (22) towards a rotor (20) to apply the disc brake during a braking operation; and a parking brake arrangement (32) comprising a parking brake piston (90) configured to urge the brake pad towards the rotor to apply the disc brake during a parking operation; a biasing arrangement (118) configured to bias the parking brake piston in the direction of the brake pad; and a retaining mechanism (108) for retaining the parking brake piston in a position where the parking brake piston is not urging the brake pad towards the rotor. The retaining mechanism is configured to release the parking brake piston during the parking operation, to enable the biasing arrangement to urge the parking brake piston towards the brake pad.

## Description

### FIELD OF THE INVENTION

The present invention relates to a disc brake for a vehicle, more specifically to a hydraulic service brake with an integrated parking brake.

### BACKGROUND OF THE INVENTION

Braking systems used for heavy vehicles, such as trucks, buses and military vehicles, have typically included separate parking and service brake systems. The service brakes are actuated by the operator to slow and stop the vehicle. The parking brake locks the wheels of the vehicle when it is parked.

In light-duty heavy vehicles, hydraulic brakes are typically used for the service brakes. A separate driveline parking brake is also typically included, such as a 10 inch drum brake. However, in, for example, electric vehicles, such standard drivelines may not be included. Accordingly, an alternative parking solution would be desirable. The present invention seeks to overcome or at least mitigate the problems associated with the prior art.

### SUMMARY OF THE INVENTION

A first aspect provides a hydraulic disc brake for a vehicle. The disc brake comprises:
a service brake arrangement comprising a service piston configured to actuate under hydraulic pressure to urge a brake pad towards a rotor to apply the disc brake during a braking operation; and
a parking brake arrangement comprising:
   a parking brake piston configured to urge the brake pad towards the rotor to apply the disc brake during a parking operation;
   a biasing arrangement configured to bias the parking brake piston in the direction of the brake pad; and
   a retaining mechanism for retaining the parking brake piston in a position where the parking brake piston is not urging the brake pad towards the rotor,
wherein the retaining mechanism is configured to release the parking brake piston during the parking operation, to enable the biasing arrangement to urge the parking brake piston towards the brake pad.

As the parking brake piston is biased in the direction of the brake pad by the biasing arrangement, a complex and/or bulky hydraulic or mechanical actuation arrangement is not required. Instead, the retaining mechanism controls when the parking brake piston is applied, and can be more compact relative to arrangements of the prior art.

The service piston may have a central longitudinal axis. The parking brake piston may be co-axial with the service piston.

As the parking brake piston is in line with the service piston, the overall packaging of the hydraulic disc brake can be minimised, enabling the brake to fit in smaller locations, for example on light electric vehicles.

The parking brake piston, the biasing arrangement and the retaining mechanism may all be arranged around the longitudinal axis, such that they are co-axial with the service piston.

Arranging the components of the parking brake piston, biasing arrangement, and retaining mechanism co-axially with the service piston reduces the total height of the disc brake, further improving its packaging and reducing the space requirements of the disc brake.

The disc brake may further comprise a single hydraulic chamber configured to actuate the service piston in a braking operation and retract the parking brake piston away from the brake pad after the parking operation.

A single hydraulic chamber is sufficient to actuate the service piston and apply the brake, as well as retract the parking brake piston after a parking operation, to enable the vehicle to be moved. As there is only a single hydraulic chamber, only a single hydraulic supply line is required, minimising complexity within the brake.

The parking brake piston may be at least partially surrounded by the biasing arrangement. The parking brake piston may comprise a shoulder portion engaged by the biasing arrangement.

The shoulder portion defines a surface to be contacted by the biasing arrangement, to actuate the parking brake piston.

The biasing arrangement may comprise a housing having a plurality of biasing elements. The biasing elements may be Belville washers.

Utilising mass-produced components such as Belville washers or other suitable biasing elements helps to minimise manufacturing costs.

The parking brake piston may have a shaft portion. The biasing elements may be located on the shaft portion. At least one of the biasing elements may engage the shoulder portion of the parking brake piston.

The retaining mechanism may comprise a moveable retaining member. Movement of the retaining member during a parking operation may release the parking brake piston.

Such a simple retaining mechanism can be easily controlled and does not require significant space or power. A minimal number of components also reduces the risk of failure.

During the parking operation, the retaining member may be retracted in an axial direction to release the parking brake piston.

Axial movement of the retaining member helps to minimise the total height of the disc brake.

The parking brake piston may have a circumferential groove. The retaining mechanism may further comprise an expandable element located in the groove configured to expand when retaining member is moved, in order to release the parking brake piston.

Automatic release of the parking brake piston can be caused by simply moving the retaining member.

In alternative embodiments, the retaining member may have at least one ramp and the retaining mechanism may further comprise at least one ball configured to be engaged between the ramp and a groove until the retaining member is rotated about the longitudinal axis, such that the ball moves along the ramp and free of the groove to release the parking brake piston.

Rotational movement of the retaining member can release the parking brake piston and has a minimal space requirement.

The retaining mechanism may be configured to be electrically released in response to a signal from the vehicle. The signal may be created by an operator of the vehicle activating an electronic parking brake control to signal the start of the parking operation.

This enables simple operation of the vehicle, as well as reduced complexity at the wheels of the vehicle, as no hydraulic supply line is necessary to release the retaining mechanism.

The retaining mechanism may be configured to engage and retain the parking brake piston after the parking operation, when the parking brake piston has been retracted.

When the parking brake piston is retracted after a parking operation, for example by pressurisation of the hydraulic chamber acting on the parking brake piston to urge it away from the brake pad, by engaging and retaining the parking brake piston, the retaining mechanism enables simpler operation of the vehicle.

The parking brake arrangement may comprise an adjustment mechanism to account for wear of the rotor and brake pad. The adjustment mechanism may comprise an adjuster nut that is configured to contact the service piston, the adjuster nut being extendable relative to an adjuster screw. The parking brake piston may be configured to, during the parking operation, engage the adjuster screw when released by the retaining arrangement, in order to transfer force from the biasing mechanism to the adjuster nut, which transfers the force to the service piston to apply the disc brake.

In this way, the disc brake acts as a combined service brake and parking brake, with automatic mechanical adjustment of the parking brake arrangement to account for wear.

In a second aspect of the invention, a parking brake arrangement is provided, for use in the hydraulic disc brake of the previous aspect.

### BRIEF DESCRIPTION OF THE DRAWINGS

Embodiments of the invention will now be described with reference to the accompanying drawings, in which:
Figure 1 is a perspective view of a disc brake according to the invention;
Figure 2 is a part-sectional perspective view of the disc brake of Figure 1, through the plane 2-2;
Figure 3 is a cross-sectional view of the disc brake of Figure 1, through the plane 2-2; and

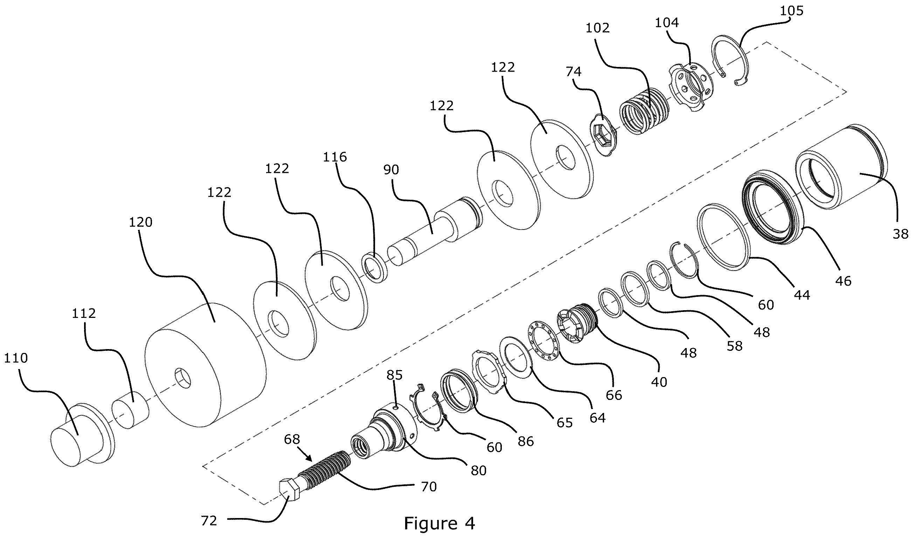

Figure 4 is an exploded view of components of a service brake actuation arrangement and a parking brake actuation arrangement along the axis 4-4 shown in Figure 3.

### DETAILED DESCRIPTION OF EMBODIMENT(S)

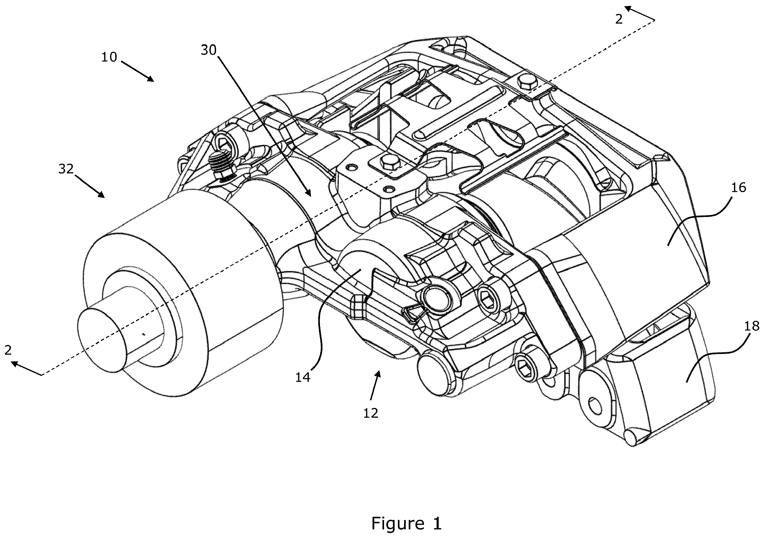

Looking at Figure 1, a disc brake for a heavy vehicle is indicated at 10. In this embodiment, the disc brake 10 is a hydraulic disc brake having a service brake arrangement 30 and a parking brake arrangement 32. As will be described in more detail below, the service brake arrangement 30 has the function of applying the disc brake 10 in a braking operation to slow or stop the vehicle and the parking brake arrangement 32 has the function of 'locking' the disc brake 10 in its applied position when the vehicle is parked.

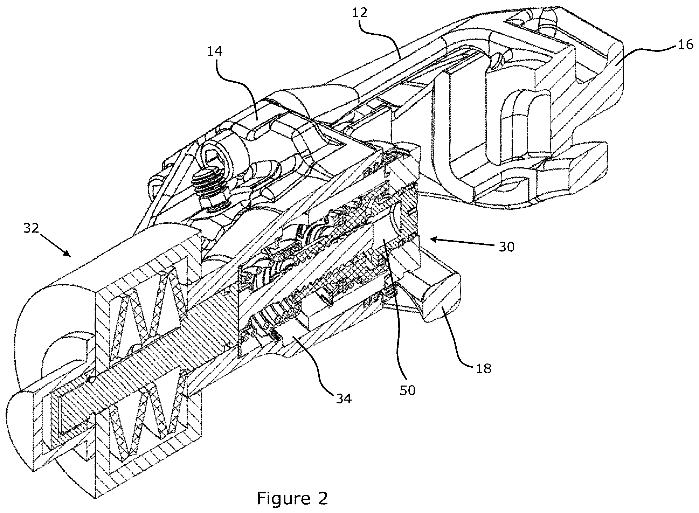

In this embodiment, the disc brake 10 is a dual-piston floating caliper disc brake. As can be seen from Figures 1 to 3, the disc brake 10 has a caliper 12 that slides on guide pins of a brake carrier 18 in a known manner. The brake carrier 18 is typically fixed to an axle at a wheel of a vehicle and extends over a rotor 20. Located on the brake carrier 18 at either side of the rotor 20 are a first brake pad 22 and a second brake pad 24. The centre of the rotor 20 defines an axis (not shown in the Figures). The caliper 12 has a caliper housing 14 and a caliper bridge 16 that extends over the rotor.

Various orientations of the disc brake 10 are described. In particular, the directions inboard and outboard refer to the typical orientation of the disc brake 10 when fitted to a vehicle. In this orientation, the brake pad closest to the centre of the vehicle (the first brake pad 22 in this embodiment) is the brake pad directly actuated by an actuation mechanism and is also known as the inboard brake pad. The outboard brake pad is mounted to the caliper bridge 16 and is the second brake pad 24 in this embodiment. Thus, inboard can be equated with an actuating side of the disc brake 10, and outboard with a reaction side. The terms radial, circumferential, tangential and chordal describe orientations with respect to the axis of the rotor 20. The terms vertical and horizontal describe orientations with the disc brake 10 mounted uppermost on an axle, though it will be appreciated that in use such a disc brake 10 may adopt any axle orientation depending upon packaging requirements of the vehicle.

Each of the first and second brake pads 22, 24 have a backplate 26 that locates friction material 28. When the service brake arrangement 30 or the parking brake arrangement 32 are applied, the backplate 26 of the first brake pad 22 is engaged in order to bring the friction material 28 of the first brake pad 22 in contact with the rotor 20. This causes the caliper 12 to slide on the brake carrier 18 such that the contact between the caliper bridge 16 and the backplate 26 of the second brake pad 24 results in the friction material 28 of the second brake pad 24 also contacting the rotor 20. This clamping action reduces rotation of the rotor by friction, and causes slowing of the vehicle in the case of the service brake arrangement 30 or prevents rotation of the vehicle wheel in the case of the parking brake arrangement 32.

In this embodiment, the caliper housing 14 includes two caliper bores 34. In this embodiment, the caliper bores 34 are machined cylindrical bores, located side-by-side and each including a service brake arrangement 30. Only one service brake arrangement 30 will be described, but it will be appreciated that their function is identical. In this embodiment, there are two service brake arrangements 30, but in other embodiments, there could be only one, or more than two. For example, there could be two service brake arrangements 30 at the inboard side of the rotor and a further two service brake arrangements 30 at the outboard side of the rotor, for a total of four.

An outer service piston 38 is located in the caliper bore 34 and configured to slide within the caliper bore 34 under hydraulic pressure in order to engage the backplate 26 of the first brake pad 22 to urge it towards the rotor 20 to apply the disc brake 10.

Inboard of the outer service piston 38, the caliper bore 34 defines a hydraulic chamber 36 having a hydraulic fluid inlet (not shown) configured to introduce hydraulic fluid into the hydraulic chamber 36 as required, to urge the outer service piston 38 in the outboard direction towards the rotor 20. During a braking operation, therefore, the service brake arrangement 30 is configured such that the outer service piston 38 actuates under hydraulic pressure to urge the first brake pad 22 towards the rotor 20 to apply the disc brake. In this embodiment, there is a single hydraulic chamber 36 that acts on the service brake arrangement 30 and the parking brake arrangement 32, as described in more detail below.

A primary piston seal 44 is arranged between the outer service piston 38 and the caliper bore 34. In this embodiment, the caliper bore 34 comprises a circumferential groove to locate the primary piston seal 44. The primary piston seal 44 helps to retain hydraulic fluid within the hydraulic chamber 36 as well as help retract the outer service piston 38 after a braking operation. A sealing boot 46 is also provided at an open end of the caliper bore 34, fixed to the caliper housing 14 and the outer service piston 38, to help prevent ingress of contaminants into the hydraulic chamber 36.

The outer service piston 38 is hollow and includes two bores of differing diameters. At its outboard end, the outer service piston 38 includes an outboard bore 52 that locates an inner service piston 40. Inboard of the outboard bore 52, is an inboard-facing recess 50 that has a greater diameter than the outboard bore 52 and locates an adjustment mechanism 56.

The inner service piston 40 can slide within the outboard bore 52. A circumferential outer surface of the inner service piston includes two grooves that each locate a secondary piston seal 48. Each secondary piston seal 48 acts between the inner service piston 40 and the outer service piston 38 to help retain hydraulic fluid within the hydraulic chamber 36.

An outboard surface of the inner service piston 40 is configured to engage the backplate 26 of the inboard brake pad 22. At an inboard end of the inner service piston 40 is a radially-outwardly extending flange portion 54.

The adjustment mechanism 56 includes an adjuster nut 80 and an adjuster screw 68 that can extend relative to one another. The adjuster screw 68 is elongate with a shaft portion 70 and an enlarged head portion 72 located at the inboard end of the shaft portion 70. In this embodiment, the head portion 72 has a hexagonal outer profile. In this embodiment, the shaft portion 70 includes a helical thread on a radially outer surface.

An adjuster screw retainer 74 is provided. The adjuster screw retainer 74 has an outer profile that locates within a corresponding reduced diameter portion of the caliper bore 34 of the caliper housing 14 such that the adjuster screw retainer 74 cannot rotate relative to the caliper housing 14. The adjuster screw retainer 74 also has an inner profile that corresponds to the outer profile of the head portion 72 of the adjuster screw 68 such that the adjuster screw 68 cannot rotate relative to the adjuster screw retainer 74.

The adjuster nut 80 is located radially outwardly and at least partially surrounds the adjuster screw 68. An inboard portion of the adjuster nut 80 defines an adjuster nut sleeve portion 81. The adjuster nut sleeve portion 81 has a substantially similar internal diameter as the external diameter of the shaft portion 70 of the adjuster screw 68. A radially inner surface of the adjuster nut sleeve portion 81 has an internal helical thread that corresponds to the helical thread on the shaft portion 70 of the adjuster screw 68, such that the adjuster screw 68 can extend relative to the adjuster nut 80. Between the teeth of the corresponding threads is a backlash. In other words, there is a spacing between the teeth such that the adjuster screw 68 can move axially by a predetermined amount before it contacts the adjuster nut 80. This predetermined amount can be, for example, the desired clearance between the first brake pad 22 and the rotor 20.

Outboard of the adjuster nut sleeve portion 81 is an adjuster nut transition portion 84 that leads to an adjuster nut shoulder portion 83. The adjuster nut transition portion 84 has a greater outer diameter than the adjuster nut sleeve portion 81. The adjuster nut shoulder portion 83 has a greater outer diameter than the adjuster nut transition portion 84. Extending radially outwardly and axially outboard from the adjuster nut shoulder portion 83 is an adjuster nut flange portion 82. The adjuster nut flange portion 82 defines an outboard-facing recess in which the flange portion 54 of the inner service piston 40 is located. At the outboard end of the adjuster nut flange portion 82, a radially inner surface of the adjuster nut flange portion 82 includes a circumferentially extending groove that locates a circlip 60. The circlip 60 retains a low friction washer 58 between an outboard-facing surface of the flange portion 54 of the inner service piston 40 and the radially inner surface of the adjuster nut flange portion 82.

An outboard-facing surface of the adjuster nut flange portion 82 is located adjacent an inboard-facing surface of the outer service piston 38. As will be described in more detail below, during an adjustment operation, the outboard-facing surface of the adjuster nut flange portion 82 engages the inboard-facing surface of the outer service piston 38, such that a clutch face 42 is defined between the adjuster nut 80 and the outer service piston 38.

The adjuster nut flange portion 82 also includes a plurality of circumferentially distributed apertures 85, to enable hydraulic fluid to enter the area defined by the recess 50 of the inner service piston 40 and provide lubrication.

Located on the adjuster nut shoulder portion 83 is an adjuster nut spring 86 that acts on an inboard-facing radial surface of the adjuster nut flange portion 82 to urge it in the direction of the adjuster nut shoulder portion 83 and provide the clutch face 42. Inboard of the adjuster nut spring 86 and located on the adjuster nut transition portion 84 are a ball race 66, a first washer 64 and a second washer 65. The second washer 64 is located most outwardly and is engaged by the adjuster nut spring 86, providing a reaction force for the adjuster nut spring 86. Sandwiched between the second washer 65 and the first washer 64 is the ball race 66, which enables smooth rotation of the adjuster nut 80 within the outer service piston 38. A circlip 60 fixed in a groove of a radially inner surface of the outer service piston 38 retains the ball race 66, the first washer 64, the second washer 65 and the adjuster nut spring 86.

Fixed to the inboard end of the caliper housing 14 is the parking brake arrangement 32. The parking brake arrangement 32 includes a parking brake piston 90, a biasing arrangement 118 and a retaining mechanism 108. The parking brake piston 90 is configured to actuate to urge the first brake pad 22 towards the rotor 20 to apply the disc brake 10 during a parking operation. The biasing arrangement 118 is configured to bias the parking brake piston 90 in the direction of the first brake pad 22. The retaining mechanism 108 is configured to retain the parking brake piston 90 in a position such that the parking brake piston 90 does not urge the first brake pad 22 towards the rotor 20 until the parking operation. During the parking operation, the retaining mechanism 108 is configured to be releasable in order to enable the biasing arrangement 118 to apply the parking brake piston 90 to urge the first brake pad 22 towards the rotor 20.

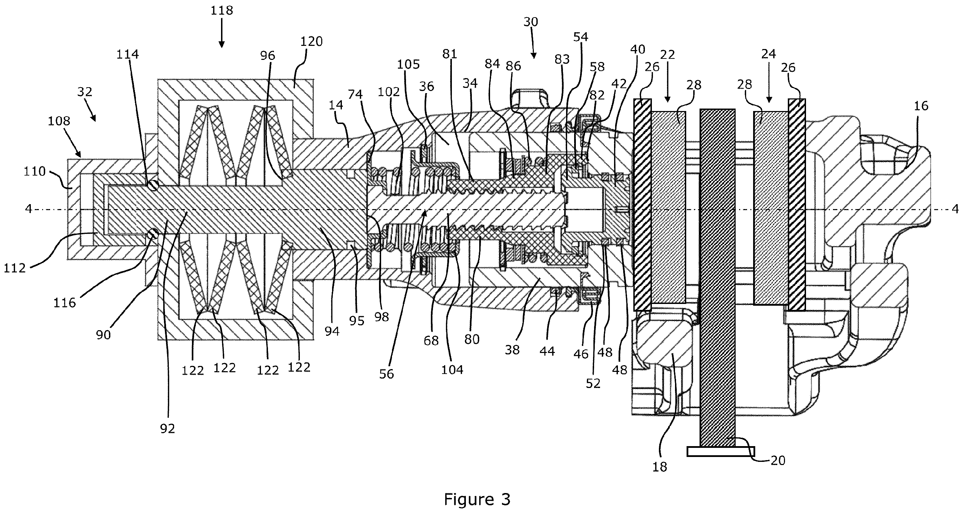

In this embodiment, the parking brake piston 90 is co-axial with the outer service piston 38 and the inner service piston 40 about a longitudinal axis 4-4 (shown in Figure 3) that extends through the centre of the outer service piston 38 and the inner service piston 40. The retaining mechanism 108 and the biasing arrangement 118 are also arranged around the axis 4-4. More specifically, in this embodiment, the parking brake piston 90 is surrounded by the biasing arrangement 118. The retaining mechanism 108 also surrounds a portion of the parking brake piston 90 and is located inboard of the biasing arrangement 118.

The parking brake piston 90 is generally cylindrical and elongate. In this embodiment, the parking brake piston 90 includes a shaft portion 92 and a shoulder portion 94. The shoulder portion 94 has an increased diameter compared to the shaft portion 92. The parking brake piston 90 is arranged such that the shoulder portion 94 can slide within a corresponding reduced diameter portion of the caliper housing 14. The radially outer surface of the shoulder portion 94 includes a groove 95 that can locate a seal element (not shown) to inhibit egress of hydraulic fluid from the hydraulic chamber 36. The shaft portion 92 extends in an inboard direction from the shoulder portion 94 of the parking brake piston 90, such that the shaft portion 92 projects from the caliper housing 14. The shoulder portion 94 also has an axially inboard engaging surface 96 that is acted upon by the biasing arrangement 118, as described in more detail below. At its outboard end, the shoulder portion 94 also has an axially outboard engaging surface 98 that is located adjacent the inboard-facing surface of the head portion 72 of the adjuster screw 68 and the inboard-facing surface of the adjuster screw retainer 74. Acting on the outboard-facing surface of the adjuster screw retainer 74 is a return spring 102. The outboard end of the return spring 102 engages a return spring retainer 104. The return spring retainer 104 is cup-shaped and includes a plurality of apertures 106 to enable hydraulic fluid to pass through. The axial travel in the outboard direction of the return spring retainer 104 is limited by a circlip 105 fixed to a radially inner surface of the caliper housing 14.

The biasing arrangement 118 includes a biasing element housing 120 that includes a plurality of biasing elements. The biasing elements are located on the shaft portion 92 of the parking brake piston 90 and are configured to act on the shoulder portion 94 of the parking brake piston 90 to urge in in the outboard direction. In this embodiment, the biasing elements are Belville washers 122. In this embodiment, there are four Belville washers 122, each having a central aperture so they can locate on the shaft portion 92 of the parking brake piston 90. The function of Belville washers is known so will not be described in detail, but when the parking brake piston 90 is released by the retaining mechanism 108 the Belville washer 122 expand axially and act on the axially inboard engaging surface 96 to urge the parking brake piston 90 in the outboard direction, into contact with the inboard-facing surface of the head portion 72 of the adjuster screw 68.

The retaining mechanism 108 is located outboard of the biasing element housing 120 and functions to retain the parking brake piston 90 until a parking operation, at which point it would be desired for the parking brake piston 90 to be released in order to contact the adjuster screw 68. In this embodiment, the shaft portion 92 of the parking brake piston 90 comprises a circumferential groove 114. Located within this groove 114 is an expandable engaging element 116. The retaining mechanism 108 includes a retaining mechanism housing 110 in which a retaining member 112 is located. The retaining member 112 is moveable. During a parking operation, the retaining member 112 can be moved, allowing the expandable engaging element 116 to be released from the groove 114 of the parking brake piston 90. Once the expandable engaging element 116 is released, the Belville washers 122 will act to move the parking brake piston 90 in the outboard direction towards the rotor 20.

In this embodiment, the retaining member 112 is retracted axially to allow the expandable engaging element 116 to expand radially and release the parking brake piston 90. After a parking operation, the retaining member 112 returns to its rest position and angled surfaces of the retaining member 112 contract the expandable engaging element 116 such that it again locates in the groove 114 of the parking brake piston 90. However, in alternative embodiments, the retaining member 112 could have at least one ramped portion and the retaining mechanism 108 could further comprise at least one ball configured to be engaged between the ramped portion and the groove 114. In this alternative embodiment, rotation of the retaining member 112 about the axis 4-4 could enable the ball to move up the ramp and free of the groove 114 to release the parking brake piston 90. Other retaining mechanisms 108 could also provide the same function.

In this embodiment, the retaining mechanism 108 is configured to be electrically released in response to a signal from the vehicle. Normally, this signal is created by an operator of the vehicle activating an electronic parking brake control to signal the start of a parking operation.

Once the retaining mechanism 108 receives the signal, the retaining member 112 is moved to release the parking brake piston 90. Due to the Belville washers 122 in the biasing element housing 120, the parking brake piston 90 is urged in the outboard direction towards the rotor 20. The axially outboard engaging surface 98 of the shoulder portion 94 of the parking brake piston 90 engages the head portion 72 of the adjuster screw 68 and urges the adjuster screw 68 in the outboard direction. Due to the threaded contact between the adjuster screw 68 and the adjuster nut 80, the adjuster nut 80 is also moved in the outboard direction. The outboard-facing surface of the adjuster nut flange portion 82 contacts the inboard-facing surface of the outer service piston 38 at the clutch face 42. The adjuster screw 68 cannot rotate due to the corresponding profiles of the adjuster screw 68 and the adjuster screw retainer 74. The adjuster nut 80 cannot rotate due to the contact between the adjuster nut flange portion 82 and the outer service piston 38 at the clutch face 42. Therefore, the outer service piston 38 is urged towards the rotor 20. The outer service piston 38 contacts the backplate 26 of the first brake pad 22 and urges it into contact with the rotor 20. Once the friction material 28 of the first brake pad 22 and the second brake pad 24 are in contact with the rotor 20, the rotor 20 can no longer rotate, the wheel is considered locked and the vehicle is considered parked.

After a parking operation, in this embodiment, retraction of the parking brake piston 90 is caused by the re-introduction of hydraulic fluid into the hydraulic chamber 36. As hydraulic fluid re-enters the hydraulic chamber 36, the pressure acts on the adjuster screw retainer 74, moving it in the axially inboard direction and also moving the adjuster screw 68 in the axially inboard direction due to the contact of the adjuster screw retainer 74 and the head portion 72 of the adjuster screw 68. The inboard-facing surface of the head portion 72 of the adjuster screw 68 engages the outboard engaging surface 98 of the shoulder portion 94 of the parking brake piston 90 and retracts the parking brake piston 90 in an axially inboard direction, so it can be re-engaged by the retaining mechanism 108. The re-introduction of hydraulic fluid could be done by, for example, the operator of the vehicle depressing the brake pedal. The retaining mechanism 108 is configured to engage and retain the parking brake piston 90 once the parking brake piston 90 has been retracted. For example, the operator of the vehicle could activate the electronic parking brake control again to signal the end of the parking operation, after they have depressed the brake pedal. Alternatively, the retaining mechanism 108 could be configured to automatically engage and retain the parking brake piston 90 once the parking brake piston 90 has been retracted.

When the distance between the friction material 28 of the first brake pad 22 and the rotor 20 is too great, due to wear of the brake pads and rotor, an adjustment operation is required to move the first brake pad 22 closer to the rotor 20. For the service brake arrangement 30, the primary piston seal 44 achieves this. Every time the outer service piston 38 is actuated due to hydraulic pressure in the hydraulic chamber 36, the outer service piston 38 is moved towards the rotor 20. After the braking operation, when the hydraulic pressure is released, the outer service piston 38 is retracted due to the frictional contact and 'springiness' of the primary piston seal 44. Accordingly, the primary piston seal 44 can be configured to retract the primary piston seal 44 by a consistent axial distance after every braking operation. In this way, the distance between the outer service piston 38 and the rotor 20 remains consistent as the brake pads and rotor wears.

As for the parking brake arrangement 32, when the disc brake 10 is applied, the pressure of the hydraulic fluid in the hydraulic chamber 36 exerts a load on the adjuster nut 80 and holds it against the outer service piston 38 at the clutch face 42. If adjustment is required, the backlash between the threaded part of the adjuster screw 68 and the adjuster nut 80 is taken up and the flanks of the helixes contact one another. The outer service piston 38 continues to move outwardly, relieving the contact at the clutch face 42. Simultaneously, The adjuster nut spring 86 is also compressed by the hydraulic pressure, and the adjuster nut 80 is caused to rotate relative to the adjuster screw 68, moving the adjuster nut 80 axially outboard relative to the adjuster screw 68 and extending the overall axial length of the adjuster screw 68 and adjuster nut 80 combination.

A relatively low hydraulic fluid pressure is required to move the outer service piston 38 towards the rotor 20. However, if the gap between the outer service piston 38 and the rotor 20 is too high, the hydraulic fluid pressure will increase. At a higher hydraulic fluid pressure, the inner service piston 40 is urged in an axially outboard direction. Via the flange portion 54 of the inner service piston 40 and the low friction washer 58, the adjuster nut 80 is also moved in an axially outboard direction and brought back into contact with the outer service piston 38 at the clutch face 42. The frictional contact at the clutch face 42 between the adjuster nut 80 and the outer service piston 38 prevents any further rotation of the adjuster nut 80. As the adjuster nut 80 and the adjuster screw 68 cannot rotate, any further increase in hydraulic fluid pressure compresses the return spring 102 as the adjuster screw 68 is urged outwardly without further adjustment taking place. When the disc brake 10 is released, the return spring 102 moves the adjuster screw 68 in an axially inboard direction to its rest position and the primary piston seal 44 retracts the outer service piston 38. The movement of the adjuster screw 68 in an axially inboard direction also moves the parking brake piston 90 in an axially inboard direction, due to engagement of the head portion 72 of the adjuster screw 68 and the outboard engaging surface 98 of the shoulder portion 94 of the parking brake piston 90. Once the parking brake piston 90 is retracted, the retaining mechanism 108 can be reengaged to retain the parking brake piston 90.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A hydraulic disc brake for a vehicle, the disc brake comprising:
a service brake arrangement comprising a service piston configured to actuate under hydraulic pressure to urge a brake pad towards a rotor to apply the disc brake during a braking operation; and
a parking brake arrangement comprising:
a parking brake piston configured to urge the brake pad towards the rotor to apply the disc brake during a parking operation;
a biasing arrangement configured to bias the parking brake piston in the direction of the brake pad; and
a retaining mechanism for retaining the parking brake piston in a position where the parking brake piston is not urging the brake pad towards the rotor,
wherein the retaining mechanism is configured to release the parking brake piston during the parking operation, to enable the biasing arrangement to urge the parking brake piston towards the brake pad.

2. The hydraulic disc brake of claim 1, wherein the service piston has a central longitudinal axis and the parking brake piston is co-axial with the service piston.

3. The hydraulic disc brake of claim 2, wherein the parking brake piston, the biasing arrangement and the retaining mechanism are arranged around the longitudinal axis, such that they are co-axial with the service piston.

4. The hydraulic disc brake of any previous claim, wherein the disc brake further comprises a single hydraulic chamber configured to actuate the service piston in a braking operation and retract the parking brake piston away from the brake pad after the parking operation.

5. The hydraulic disc brake of any previous claim, wherein the parking brake piston is at least partially surrounded by the biasing arrangement, wherein the parking brake piston comprises a shoulder portion engaged by the biasing arrangement.

6. The hydraulic disc brake of claim 5, wherein the biasing arrangement comprises a housing having a plurality of biasing elements, optionally wherein the biasing elements are Belville washers.

7. The hydraulic disc brake of claim 6, wherein the parking brake piston has a shaft portion and the biasing elements are located on the shaft portion and at least one of the biasing elements engages the shoulder portion of the parking brake piston.

8. The hydraulic disc brake of any previous claim, wherein the retaining mechanism comprises a moveable retaining member, wherein movement of the retaining member during a parking operation releases the parking brake piston.

9. The hydraulic disc brake of claim 8, wherein during the parking operation, the retaining member is retracted in an axial direction to release the parking brake piston.

10. The hydraulic disc brake of claim 9, wherein the parking brake piston has a circumferential groove, and the retaining mechanism further comprises an expandable element located in the groove configured to expand when retaining member is moved, in order to release the parking brake piston.

11. The hydraulic disc brake of claim 8, wherein the retaining member has at least one ramp and the retaining mechanism further comprises at least one ball configured to be engaged between the ramp and a groove until the retaining member is rotated about the longitudinal axis, such that the ball moves along the ramp and free of the groove to release the parking brake piston.

12. The hydraulic disc brake of any previous claim wherein the retaining mechanism is configured to be electrically released in response to a signal from the vehicle, optionally where the signal is created by an operator of the vehicle activating an electronic parking brake control to signal the start of the parking operation.

13. The hydraulic disc brake of any previous claim, wherein the retaining mechanism is configured to engage and retain the parking brake piston after the parking operation, when the parking brake piston has been retracted.

14. The hydraulic disc brake of any previous claim wherein the parking brake arrangement comprises an adjustment mechanism to account for wear of the rotor and brake pad, wherein the adjustment mechanism comprises an adjuster nut that is configured to contact the service piston, the adjuster nut being extendable relative to an adjuster screw, wherein the parking brake piston is configured to, during the parking operation, engage the adjuster screw when released by the retaining arrangement, in order to transfer force from the biasing arrangement to the adjuster nut, which transfers the force to the service piston to apply the disc brake.

15. A parking brake arrangement for use in the hydraulic disc brake of any of claims 1 to 14.
